# EUROPEAN PATENT APPLICATION

(11) **EP 4 797 571 A1**
(43) Date of publication of application: **26.08.2026**
(21) Application number: 24895626.0
(22) Date of filing: 01.07.2024
(51) Int. Cl.: H04B 10/25

(54) **FTTR NETWORKING SYSTEM**

(30) Priority: 30.11.2023 CN 202323278180 U
(71) Applicant: HUAWEI TECHNOLOGIES CO., LTD., Shenzhen 518129 (CN)
(72) Inventor: ZHU, Jia, Shenzhen, Guangdong 518129 (CN); LI, Yao, Shenzhen, Guangdong 518129 (CN)
(74) Representative: Gill Jennings & Every LLP
(86) International application number: PCT/CN2024/102821
(87) International publication number: WO 2025/112523

(57) **Abstract**

The present disclosure provides an FTTR networking system, relating to the field of gateway device technologies. The FTTR networking system includes a main gateway and an optical splitter. The main gateway includes a first back housing and a first mounting structure. The first mounting structure is connected to the first back housing. The optical splitter includes a second mounting structure. The second mounting structure fits with the first mounting structure, to connect the optical splitter to the first back housing of the main gateway. The optical splitter in the FTTR networking system is connected to a back housing of the main gateway through a mounting structure, to implement integrated mounting of the optical splitter and the main gateway, reduce mounting difficulty of the main gateway and the optical splitter, and reduce space occupied by the optical splitter.

## Description

This application claims priority to Chinese Patent Application No. 202323278180.3, filed on November 30, 2023 and entitled "FTTR NETWORKING SYSTEM", which is incorporated herein by reference in its entirety.

### TECHNICAL FIELD

The present disclosure relates to the field of gateway device technologies, and in particular, to an FTTR networking system.

### BACKGROUND

With the development of communication technologies, optical fiber transmission is increasingly applied to communication systems, where fiber to the room (Fiber to The Room, FTTR) is an important part of an optical network. In an FTTR networking system, a main gateway, serving as an optical network unit (Optical Network Unit, ONU), is connected upstream to an optical line termination (Optical Line Termination, OLT) at a carrier central office through an uplink optical port, and is connected to an ONU through a downlink optical port. Because the main gateway has only one downlink optical port, in a scenario in which a single main gateway corresponds to a plurality of auxiliary gateways, optical splitting is typically performed through an optical splitter to implement a connection between one main gateway and the plurality of auxiliary gateways.

In related technologies, the optical splitter is typically wall-mounted alone through expansion screws, or randomly placed on a desk or another support carrier together with the main gateway. Such a separate mounting manner of the optical splitter results in occupation of additional space by the optical splitter, and cables from the main gateway to the optical splitter are very messy.

### SUMMARY

The present disclosure provides an FTTR networking system. An optical splitter is connected to a back housing of a main gateway through a mounting structure, to implement integrated mounting of the optical splitter and the main gateway, reduce mounting difficulty of the main gateway and the optical splitter, and reduce space occupied by the optical splitter.

The FTTR networking system includes the main gateway and the optical splitter.

The main gateway includes a first back housing and a first mounting structure. The first mounting structure is connected to the first back housing.

The optical splitter includes a second mounting structure. The second mounting structure fits with the first mounting structure, to connect the optical splitter to the first back housing of the main gateway.

According to the solution provided in the present disclosure, a mounting structure is arranged on each of the main gateway and the optical splitter, and the optical splitter is connected to a back housing of the main gateway through a fit between the mounting structures, to implement integrated mounting of the optical splitter and the main gateway. Compared with a conventional wall-mounted manner of the optical splitter, additional on-site puncturing for mounting the optical splitter is not required, to reduce the mounting difficulty of the optical splitter. Compared with a manner of placing the optical splitter separately on a desk, the space occupied by the optical splitter is reduced.

In a possible implementation, the main gateway further includes a first panel.

The optical splitter is shielded by the first panel, and the first panel is arranged opposite to the first back housing.

According to the solution provided in the present disclosure, the optical splitter is arranged to be shielded by the first panel, so that the optical splitter is invisible on a panel side of the main gateway, to implement concealed mounting of the optical splitter, and improve overall aesthetics of an assembly of the main gateway and the optical splitter.

In a possible implementation, the first mounting structure includes a pair of first snaps that are arranged opposite to each other, and a snap-fit opening is defined between the pair of first snaps.

The second mounting structure includes a pair of second snaps that are arranged opposite to each other, and the second snaps pass through the snap-fit opening and are snap-fitted with the first snaps.

According to the solution provided in the present disclosure, a snap fit is implemented through the first snap arranged on the main gateway and the second snap arranged on the optical splitter, so that the optical splitter is connected to a back side of the main gateway. The snap-fit structure is simple and low in assembly difficulty, to help reduce the mounting difficulty of the optical splitter.

In a possible implementation, at least one snap in the pair of first snaps and the pair of second snaps is provided with an inclined guide surface, and the inclined guide surface is configured to guide the second snap to pass through the snap-fit opening.

According to the solution provided in the present disclosure, the inclined guide surface that can provide a guidance function is arranged on the first snap and the second snap, to further reduce assembly difficulty of the main gateway and the optical splitter.

In a possible implementation, the first mounting structure includes a mounting hole, and the second mounting structure includes a connecting pin.

The connecting pin penetrates into the mounting hole, and the connecting pin is snap-fitted with an edge of the mounting hole, to restrict movement of the optical splitter in a direction perpendicular to the first back housing.

According to the solution provided in the present disclosure, engagement is implemented through the mounting hole provided on the main gateway and the connecting pin arranged on the optical splitter, so that the optical splitter is connected to a back side of the main gateway. The mounting hole and the connecting pin are simple in structure, easy to arrange, and low in assembly difficulty, to help reduce the mounting difficulty of the optical splitter.

In a possible implementation, the mounting hole includes a first hole and a second hole that are in communication with each other, and a diameter of the first hole is greater than a diameter of the second hole.

The connecting pin includes a cap portion and a connecting rod portion that are connected, an outer diameter of the cap portion is less than the diameter of the first hole and greater than the diameter of the second hole, and an outer diameter of the connecting rod portion is less than the diameter of the second hole.

The connecting rod portion is limited at one end of the second hole away from the first hole.

According to the solution provided in the present disclosure, the mounting hole on the main gateway is provided as a structure of a gourd-shaped hole. When the optical splitter is assembled, the connecting pin on the optical splitter may penetrate into the first hole with a larger size in the mounting hole, and then slide into the second hole with a smaller size, to implement engagement between the connecting pin and the mounting hole. Through such an arrangement, the connecting pin and the mounting hole may be slidably assembled, to further reduce the mounting difficulty of the optical splitter.

In a possible implementation, the first mounting structure includes a magnetic member, the second mounting structure includes a magnetic attraction member, the magnetic member is magnetic, and the magnetic attraction member is attractable by the magnetic member.

The magnetic member and the magnetic attraction member are connected through magnetic attraction.

According to the solution provided in the present disclosure, the optical splitter is connected to the back side of the main gateway through a magnetic fit. The magnetic attraction fit structure is simple and low in assembly difficulty, to help reduce the mounting difficulty of the optical splitter.

In a possible implementation, the optical splitter includes a second back housing.

The second mounting structure is fixed to the second back housing; or the second mounting structure is at least a part of the second back housing.

According to the solution provided in the present disclosure, the magnetic member or the magnetic attraction member is fastened to the second back housing of the optical splitter, so that the optical splitter is attached to the main gateway through the back housing to expose a panel side of the optical splitter, to improve overall aesthetics of an assembly of the main gateway and the optical splitter. In addition, the second mounting structure serving as the magnetic attraction member or the magnetic member, is directly integrally formed with the second back housing of the optical splitter, to reduce the mounting difficulty of the optical splitter. For example, the second back housing of the optical splitter may be made of a material that can be magnetically attracted.

In a possible implementation, the first mounting structure includes a locating pin, and the second mounting structure includes a locating hole.

The locating pin fits with the locating hole, to restrict movement of the optical splitter in a direction parallel to the first back housing.

According to the solution provided in the present disclosure, through a fit between the locating pin and the locating hole, position limiting can be provided in the direction parallel to the first back housing, to improve connection stability between the main gateway and the optical splitter. In addition, a fitting structure of the locating pin and the locating hole may provide preliminary alignment when the optical splitter is assembled. This helps reduce the mounting difficulty of the optical splitter.

In a possible implementation, the optical splitter includes a lug portion and a primary body portion, the lug portion is connected to an edge of the primary body portion, and the lug portion is arranged parallel to the first back housing.

The locating hole is provided on the lug portion.

According to the solution provided in the present disclosure, the lug portion is connected to the edge of the primary body portion, and the lug portion may be exposed relative to the primary body portion. Therefore, when the optical splitter is assembled with the main gateway, the locating hole provided on the lug portion is always visible to a user, so that the locating hole is aligned with the locating pin. This helps reduce the mounting difficulty of the optical splitter.

In a possible implementation, the main gateway is further provided with at least one wire-retaining structure, the at least one wire-retaining structure is connected to the first back housing, and the wire-retaining structure is configured to limit a position of an optical fiber connected to the optical splitter.

According to the solution provided in the present disclosure, the wire-retaining structure is arranged on the back housing of the main gateway, and the optical fiber connected to the optical splitter is fastened to and hidden on a rear side of the main gateway, to improve the overall aesthetics of the assembly of the main gateway and the optical splitter.

In a possible implementation, the main gateway includes a support leg, the support leg is located on a bottom side of the main gateway, and the support leg is configured to support the main gateway and the optical splitter.

According to the solution provided in the present disclosure, in a scenario in which the optical splitter is mounted on a back of the main gateway, the main gateway is vertically placed through the support leg. The mounting difficulty is lower than that in a wall-mounted manner.

### BRIEF DESCRIPTION OF DRAWINGS

FIG. 1 is a diagram of a structure of an FTTR networking system according to an example embodiment of the present disclosure;
FIG. 2 is a diagram of a structure of a snap fit between a main gateway and an optical splitter in an FTTR networking system according to an example embodiment of the present disclosure;
FIG. 3 is a schematic cross-sectional structural diagram of a snap fit between a main gateway and an optical splitter in an FTTR networking system according to an example embodiment of the present disclosure;
FIG. 4 is an enlarged view of a part A in FIG. 3;
FIG. 5 is a diagram of a structure of a fit between a main gateway and an optical splitter through a mounting hole and a connecting pin in an FTTR networking system according to an example embodiment of the present disclosure;
FIG. 6 is an enlarged view of a part B in FIG. 5;
FIG. 7 is an enlarged view of a part C in FIG. 5;
FIG. 8 is a diagram of a structure of a magnetic fit between a main gateway and an optical splitter in an FTTR networking system according to an example embodiment of the present disclosure;
FIG. 9 is a diagram of a structure of a fit between a main gateway and an optical splitter through a locating pin and a locating hole in an FTTR networking system according to an example embodiment of the present disclosure;
FIG. 10 is a diagram of a first structure of a main gateway in an FTTR networking system according to an example embodiment of the present disclosure; and
FIG. 11 is a diagram of a second structure of a main gateway in an FTTR networking system according to an example embodiment of the present disclosure.

### DESCRIPTIONS OF REFERENCE NUMERALS

1. Main gateway; 11. First back housing; 12. First panel; 13. First mounting structure; 131. First snap; 1311. Snap-fit opening; 1312. First inclined guide surface; 132. Mounting hole; 1321. First hole; 1322. Second hole; 133. Magnetic member; 134. Locating pin; 14. Wire-retaining structure; 15. Support leg;
2. Optical splitter; 21. Second back housing; 22. Second panel; 23. Second mounting structure; 231. Second snap; 2311. Second inclined guide surface; 232. Connecting pin; 2321. Cap portion; 2322. Connecting rod portion; 233. Magnetic attraction member; 234. Lug portion; 2341. Locating hole; and 24. Primary body portion.

### DESCRIPTION OF EMBODIMENTS

To make objectives, technical solutions, and advantages of the present disclosure clearer, implementations of the present disclosure are further described in detail below with reference to the accompanying drawings.

Embodiments relate to an FTTR networking system. In the FTTR networking system, a mounting structure may be arranged on each of a main gateway and an optical splitter, and the optical splitter is connected to a back housing of the main gateway through a fit between the mounting structures, to implement integrated mounting of the optical splitter and the main gateway, reduce the mounting difficulty of the main gateway and the optical splitter, and reduce space occupied by the optical splitter.

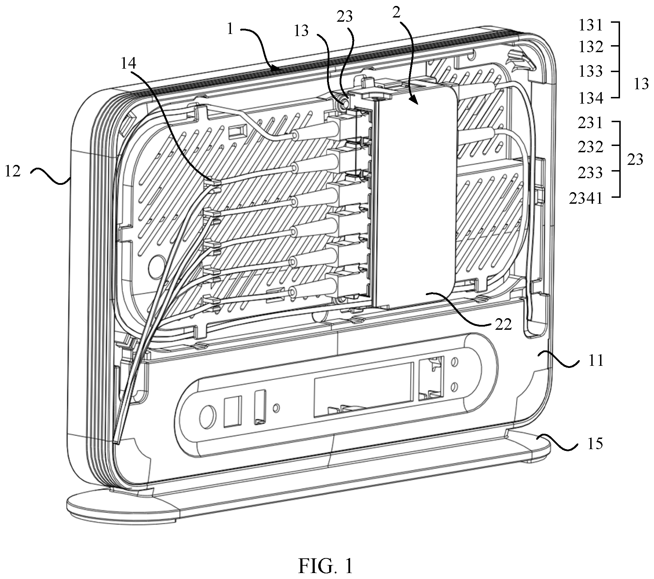

FIG. 1 is a diagram of a structure of an FTTR networking system according to an example embodiment of the present disclosure. As shown in FIG. 1, the FTTR networking system includes a main gateway 1 and an optical splitter 2. The main gateway 1 includes a first back housing 11 and a first mounting structure 13. The first mounting structure 13 is connected to the first back housing 11. Correspondingly, the optical splitter 2 includes a second mounting structure 23. The second mounting structure 23 fits with the first mounting structure 13, to connect the optical splitter 2 to the first back housing 11 of the main gateway 1. In an example, the main gateway 1 further includes a first panel 12 arranged opposite to the first back housing 11. The first panel 12 and the first back housing 11 may be assembled to form an accommodating cavity. Electronic devices for implementing various functions in the main gateway 1 may be accommodated in the accommodating cavity. For example, the first panel 12 and the first back housing 11 may be connected through engagement. During specific use, the first panel 12 in the main gateway 1 may face a user, and the first back housing 11 arranged opposite to the first panel 12 may be hidden behind the first panel 12 and invisible to the user. Therefore, after the optical splitter 2 is connected to the first back housing 11 of the main gateway 1 through the first mounting structure 13 and the second mounting structure 23, a part of the optical splitter 2 or an entirety of the optical splitter 2 may be hidden behind the main gateway 1.

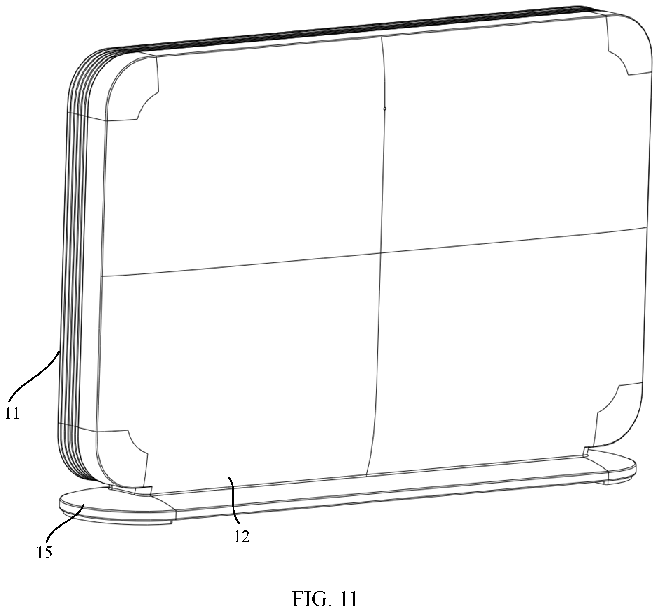

As shown in FIG. 1 and FIG. 11, a size of the optical splitter 2 may be less than or even much less than a size of the main gateway 1, and the optical splitter 2 may be substantially arranged in a middle part of the first back housing 11 in the main gateway 1, so that the optical splitter 2 is shielded by the first panel 12.

In an example, the optical splitter 2 may include a second back housing 21 and a second panel 22 that are arranged opposite to each other. The optical splitter 2 may be connected to the first back housing 11 in the main gateway 1 through the second back housing 21, so that the second panel 22 in the optical splitter 2 may be exposed relative to the main gateway 1.

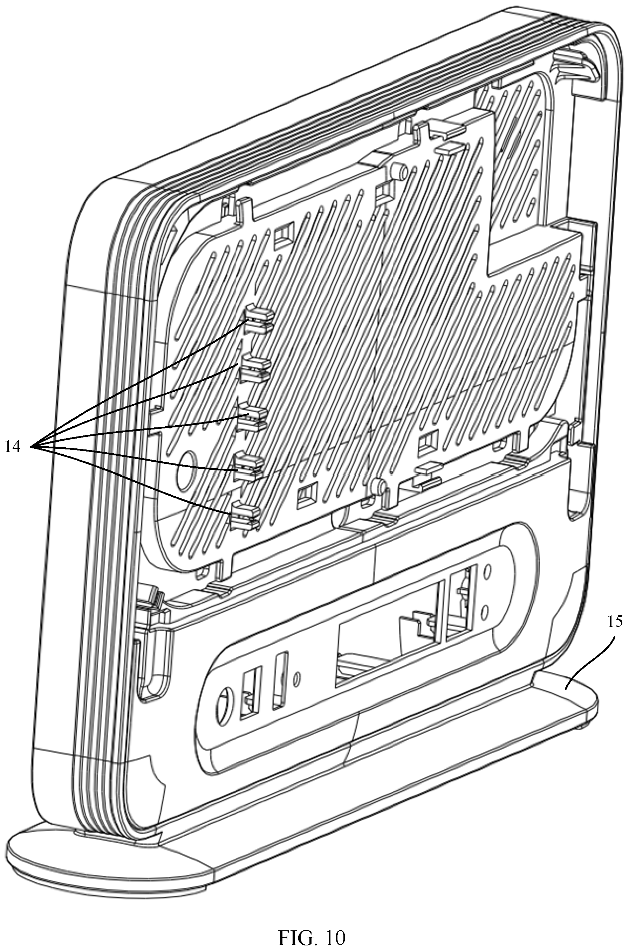

Because a plurality of cables are connected to the optical splitter 2, as shown in FIG. 1 and FIG. 10, at least one wire-retaining structure 14 may be further arranged on the first back housing 11 of the main gateway 1, and the wire-retaining structure 14 is configured to limit a position of an optical fiber connected to the optical splitter 2.

In an example, each wire-retaining structure 14 may include a pair of clamping plates that are arranged opposite to each other, and a threading slot for the optical fiber to pass through may be formed between the pair of clamping plates. In addition, one end of the pair of clamping plates away from the first back housing 11 may have a protruding limiting portion, and two limiting portions may be arranged to move toward each other, so that the two limiting portions may form a tightened notch for restricting the optical fiber from disengaging from the threading slot.

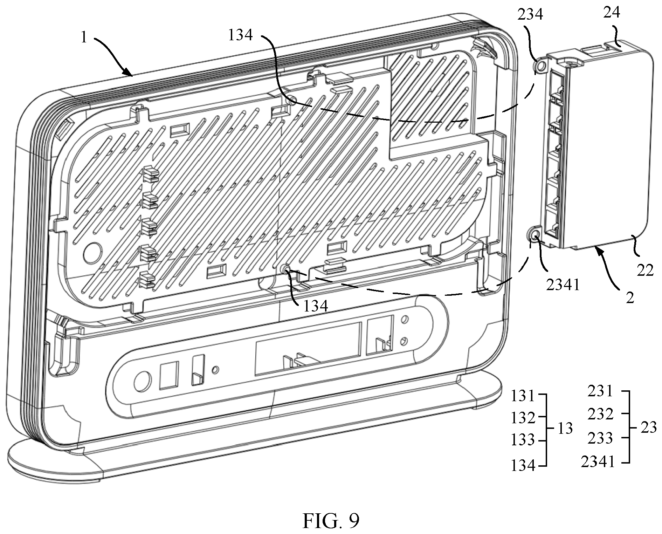

After the optical splitter 2 is mounted on a back of the first back housing 11 of the main gateway 1, the optical splitter 2 may affect wall-mounting of the main gateway 1 to a wall. In view of this, as shown in FIG. 1 and FIG. 9, the main gateway 1 includes a support leg 15. The support leg 15 is located on a bottom side of the main gateway 1. The support leg 15 is configured to support the main gateway 1 and the optical splitter 2. In an example, a combination of the main gateway 1 and the optical splitter 2 may be vertically supported on a fixed carrier such as a desktop through the support leg 15. Certainly, in another example, a fastening structure such as a support may also be additionally arranged, to implement wall- mounting of the combination of the main gateway 1 and the optical splitter 2 to the wall.

In an example, the support leg 15 may be detachably or movably connected to an enclosure formed by the first back housing 11 and the first panel 12 of the main gateway 1. Alternatively, the support leg 15 may be integrally formed with the first back housing 11 or the first panel 12 as a base.

In this embodiment, the main gateway 1 and the optical splitter 2 may be connected together through a snap fit, a hanging hole fit, or a magnetic fit. The foregoing three fitting manners may be used separately or in combination. For example, in addition to the connection through the snap fit, the main gateway 1 and the optical splitter 2 may be further both provided with mounting structures for implementing the hanging hole fit or the magnetic fit.

A structural feature for implementing the snap fit is described below.

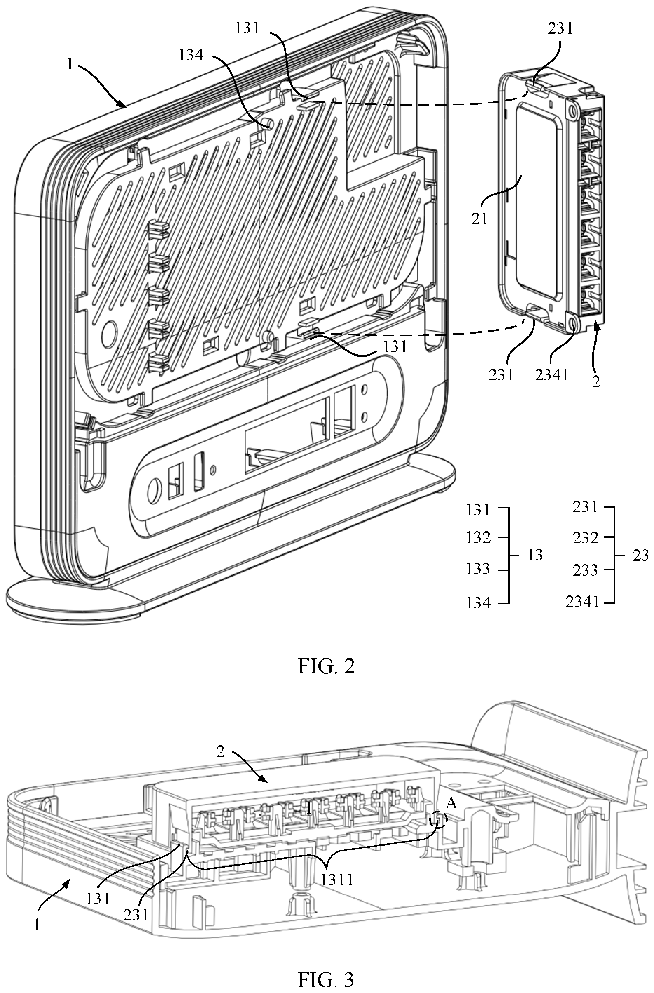

As shown in FIG. 2, FIG. 3, and FIG. 4, the first mounting structure 13 includes a pair of first snaps 131 that are arranged opposite to each other, and a snap-fit opening 1311 is defined between the pair of first snaps 131. The second mounting structure 23 includes a pair of second snaps 231 that are arranged opposite to each other. The second snaps 231 pass through the snap-fit opening 1311 and are snap-fitted with the first snaps 131.

In an example, the pair of first snaps 131 may be respectively arranged close to a top portion and a bottom portion of the first back housing 11, so that the snap-fit opening 1311 in a height direction of the main gateway 1 may be formed between the pair of first snaps 131. The pair of second snaps 231 on the optical splitter 2 may also be arranged opposite to each other along a height direction of the optical splitter 2, so that the optical splitter 2 may be vertically fastened to a rear side of the main gateway 1.

In another example, the pair of first snaps 131 may be respectively close to two side portions in the first back housing 11 that are arranged in a length direction, so that the pair of first snaps 131 may be arranged opposite to each other in the length direction of the main gateway 1. In this case, the pair of second snaps 231 on the optical splitter 2 may be arranged opposite to each other in the height direction of the optical splitter 2, or the second snaps 231 may be arranged opposite to each other in a length direction of the optical splitter 2, so that the optical splitter 2 may be transversely fastened to a rear side of the main gateway 1. A fastening direction of the optical splitter 2 on the first back housing 11 of the main gateway 1 is not limited in this embodiment.

In this embodiment, when the user normally uses the main gateway 1, a part of the main gateway 1 close to a side of a user body may be considered as a "bottom portion", and a part of the main gateway away from the side of the user body may be considered as a "top portion". For example, when the main gateway 1 or the optical splitter 2 is wall-mounted to a wall or vertically supported on a desktop, an upper part in a vertical direction may be used as the "top portion", and a lower part in the vertical direction may be used as the "bottom portion". A "side portion" refers to a part extending between the top portion and the bottom portion.

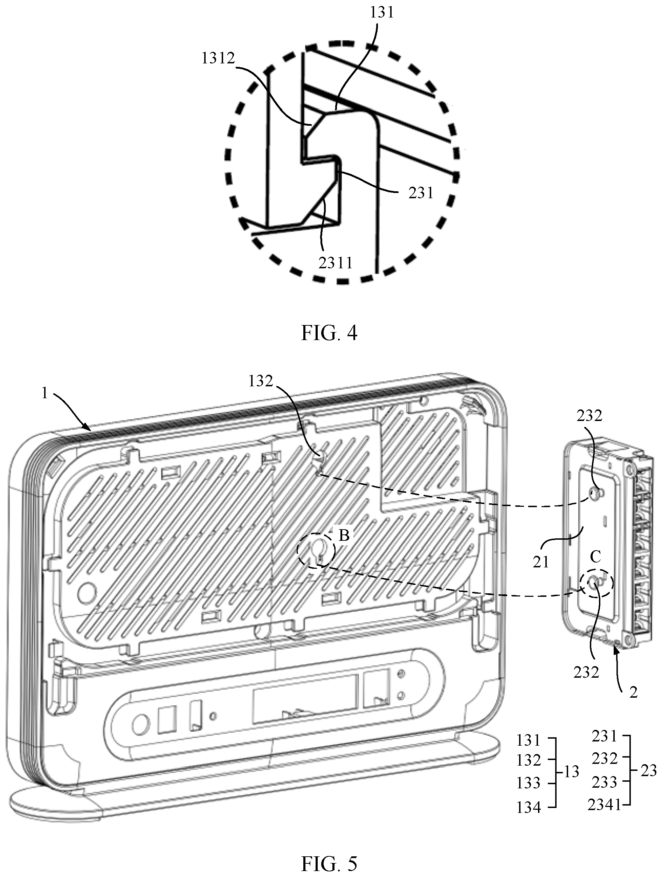

As shown in FIG. 3 and FIG. 4, the first snap 131 may be formed in a hook shape, and includes a connecting portion and a hook portion that are connected to each other. The connecting portion is configured to connect to the first back housing 11 of the main gateway 1. Two hook portions in the pair of first snaps 131 may be arranged opposite to each other and close to each other, to form a snap-fit opening 1311 between the two hook portions, and accommodating space for accommodating the second snap 231 is defined between the two opposite connecting portions. Similarly, the second snap 231 may also be formed in a hook shape, a hook portion in the second snap 231 may pass through the snap-fit opening 1311 to abut against the first snap 131, and a connecting portion in the second snap 231 may be located on an outer side of the snap-fit opening 1311, and is connected to the second back housing 21 of the optical splitter 2.

When the optical splitter 2 and the main gateway 1 are assembled, the optical splitter 2 moves to the vicinity of the first back housing 11 of the main gateway 1, and the second snap 231 on the optical splitter 2 is substantially aligned with the first snap 131 on the main gateway 1 to move through the snap-fit opening 1311. The second snap 231 may be squeezed by the corresponding first snap 131 and deforms when passing through the snap-fit opening 1311. In addition, after the second snap 231 passes through the snap-fit opening 1311, the second snap 231 may recover from elastic deformation and abut against the first snap 131 under an action of a restoring force.

The second snap 231 may undergo elastic deformation in a process of passing through the snap-fit opening 1311. Consequently, the user is obstructed from moving the optical splitter 2. In view of this, an inclined guide surface may be arranged on at least one snap in the pair of first snaps 131 and the pair of second snaps 231. The inclined guide surface is configured to guide the second snap 231 to pass through the snap-fit opening 1311.

In an example, each first snap 131 and each second snap 231 may be both provided with the inclined guide surface. As shown in FIG. 4, the inclined guide surface in the first snap 131 (which may be referred to as a first inclined guide surface 1312 below) may be inclined such that a larger distance from the first back housing 11 indicates greater inclination toward an outer side away from another first snap 131, so that the snap-fit opening 1311 is formed in a shape of a bell mouth, and then the second snap 231 in the optical splitter 2 can pass through the snap-fit opening 1311. An inclination direction of the inclined guide surface (which may be referred to as a second inclined guide surface 2311 below) in the second snap 231 may be consistent with an inclination direction of the first inclined guide surface 1312. In other words, the second inclined guide surface 2311 may be inclined such that a larger distance from the second back housing 21 indicates greater inclination toward a direction away from another second snap 231. When the second snap 231 passes through the snap-fit opening 1311, the first inclined guide surface 1312 and the second inclined guide surface 2311 may slide against each other.

Refer to FIG. 3 and FIG. 4. Structures of the first snap 131 and the second snap 231 are visible, and the first snap 131 fits with the second snap 231 to restrict movement of the optical splitter 2 in a direction perpendicular to the first back housing 11, for example, to restrict movement of the optical splitter 2 in a thickness direction of the main gateway 1. However, when the optical splitter 2 shakes or moves in a direction parallel to the first back housing 11, the first snap 131 and the second snap 231 may be disengaged from each other.

In view of this, as shown in FIG. 2, the first mounting structure 13 includes a locating pin 134, and the second mounting structure 23 includes a locating hole 2341. The locating pin 134 fits with the locating hole 2341, to restrict the movement of the optical splitter 2 in the direction parallel to the first back housing 11.

In an example, the locating pin 134 may be, for example, a cylinder protruding relative to the first back housing 11. Correspondingly, the locating hole 2341 may be a circular hole. An outer diameter of the locating pin 134 may be substantially consistent with a diameter of the locating hole 2341, or slightly less than the diameter of the locating hole 2341. When the optical splitter 2 and the main gateway 1 are assembled, a part of the locating pin 134 may extend into the locating hole 2341, to restrict the movement of the optical splitter 2 in the direction parallel to the first back housing 11.

In an example, the locating pins 134 may be arranged in pairs on the first back housing 11, and correspondingly, the locating holes 2341 may be arranged in pairs on the optical splitter 2. In addition, each locating pin 134 may be arranged near the first snap 131, so that the user performs preliminary alignment based on a position of the locating pin 134 when the optical splitter 2 is assembled.

As shown in FIG. 9, the optical splitter 2 includes a lug portion 234 and a primary body portion 24. The lug portion 234 is connected to an edge of the primary body portion 24, and the lug portion 234 may be arranged parallel to the first back housing 11. The locating hole 2341 is provided on the lug portion 234, so that the locating hole 2341 can be exposed relative to the primary body portion 24 of the optical splitter 2.

In an example, the lug portion 234 may be connected to an edge of a side portion of the primary body portion 24, so that the locating hole 2341 provided on the lug portion 234 can be exposed relative to the primary body portion 24 of the optical splitter 2.

In addition, the lug portion 234 may be arranged close to a side of the second back housing 21 of the optical splitter 2, so that when the user holds the optical splitter 2 from a side of the second panel 22 of the optical splitter 2 and moves the second back housing 21 close to the first back housing 11 in the main gateway 1, the locating pin 134 on the first back housing 11 may fit with the locating hole 2341 provided on the lug portion 234 sooner.

A structural feature for implementing the hanging hole fit is described below.

As shown in FIG. 5, FIG. 6, and FIG. 7, the first mounting structure 13 may include a mounting hole 132, and the second mounting structure 23 includes a connecting pin 232. The connecting pin 232 may penetrate into the mounting hole 132 and be snap-fitted with an edge of the mounting hole 132, to restrict the movement of the optical splitter 2 in the direction perpendicular to the first back housing 11.

The mounting hole 132 may be a through hole provided on the first back housing 11. The through hole extends through the first back housing 11 in a thickness direction of the first back housing 11, so that after the connecting pin 232 penetrates into the mounting hole 132, the connecting pin 232 may be snap-fitted with the edge of the mounting hole 132, to prevent the connecting pin 232 from passing through and disengaging from the mounting hole 132.

In an example, the connecting pin 232 may be in an interference fit with the mounting hole 132. The connecting pin 232 is squeezed and elastically deforms during penetration into the mounting hole 132, and a part of the connecting pin that passes through the mounting hole 132 may recover from the elastic deformation, and is snap-fitted with the edge of the mounting hole 132 under the action of the restoring force.

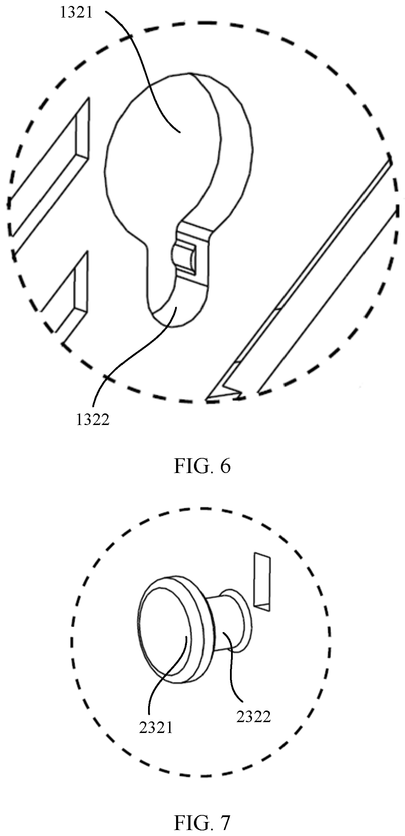

In another example, the mounting hole 132 may be a gourd-shaped hole, and the connecting pin 232 and the mounting hole 132 may be slidably assembled. As shown in FIG. 6 and FIG. 7, the mounting hole 132 includes a first hole 1321 and a second hole 1322 that are in communication with each other. A diameter of the first hole 1321 is greater than a diameter of the second hole 1322. The connecting pin 232 includes a cap portion 2321 and a connecting rod portion 2322 that are connected. An outer diameter of the cap portion 2321 is less than the diameter of the first hole 1321 and greater than the diameter of the second hole 1322, and an outer diameter of the connecting rod portion 2322 is less than the diameter of the second hole 1322. The connecting rod portion 2322 is limited at one end of the second hole 1322 away from the first hole 1321.

When the optical splitter 2 and the main gateway 1 are assembled, the cap portion 2321 in the connecting pin 232 may first penetrate into the first hole 1321 with a larger size, and drive the connecting rod portion 2322 to move together, so that the connecting rod portion 2322 also penetrates into the first hole 1321. Then the connecting pin 232 may slide from the first hole 1321 to the second hole 1322 with a smaller size. In this case, the connecting rod portion 2322 fits with the second hole 1322. In addition, because the outer diameter of the cap portion 2321 is greater than the diameter of the second hole 1322, the cap portion 2321 cannot pass through and disengage from the second hole 1322, to restrict the movement of the optical splitter 2 in the direction perpendicular to the first back housing 11. Under an action of gravity of the optical splitter 2, the connecting rod portion 2322 is limited at the end of the second hole 1322 away from the first hole 1321, so that the optical splitter 2 can be hung on a back side of the main gateway 1.

In an example, the connecting pin 232 may be a protruding structure integrally formed with the second back housing 21 in the optical splitter 2, so that the connecting pin 232 and the second back housing 21 may be formed in one piece. In another example, the connecting pin 232 may be a hanging nail independent of the second back housing 21. A fit hole fitting with the hanging nail may be provided on the second back housing 21.

Similar to the snap fit, when the hanging hole fit is used for the optical splitter 2 and the main gateway 1, the first mounting structure 13 includes the locating pin 134, and the second mounting structure 23 includes the locating hole 2341. The locating pin 134 fits with the locating hole 2341, to restrict the movement of the optical splitter 2 in the direction parallel to the first back housing 11.

A structural feature for implementing the magnetic fit is described below.

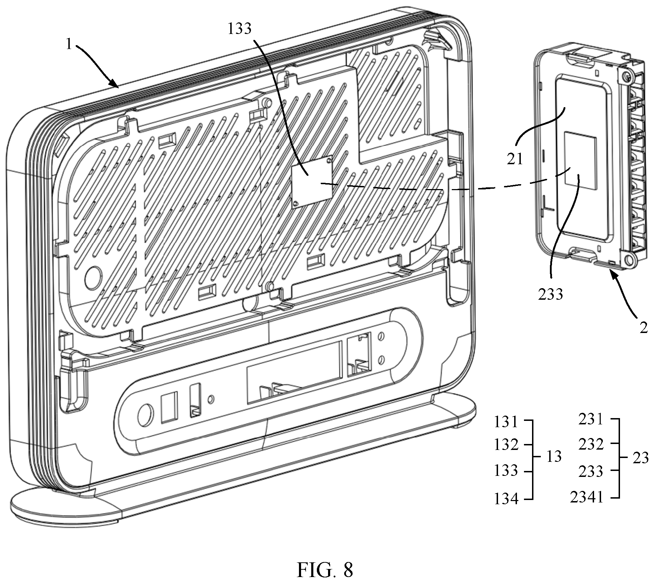

As shown in FIG. 8, the first mounting structure 13 may include a magnetic member 133, and the second mounting structure 23 may include a magnetic attraction member 233. The magnetic member 133 is magnetic, the magnetic attraction member 233 is attractable by the magnetic member 133, and the magnetic member 133 and the magnetic attraction member 233 are connected through magnetic attraction. For example, the magnetic member 133 may be, for example, a magnet, and the magnetic attraction member 233 may be, for example, an iron block. In another example, the magnetic member 133 may be an electromagnetic component.

In another example, the first mounting structure 13 may include the magnetic attraction member 233, and the second mounting structure 23 may include the magnetic member 133. In other words, the first mounting structure 13 includes the magnetic member 133, and the second mounting structure 23 includes the magnetic attraction member 233.

The magnetic attraction member 233 and the second back housing 21 in the optical splitter 2 may be integrally formed, so that the second mounting structure 23 is at least a part of the second back housing 21. For example, the second back housing 21 may be made of a ferromagnetic material, and therefore is attractable by the magnetic member 133 on the main gateway 1. Alternatively, the magnetic attraction member 233 may serve as an independent component, and is fastened to the second back housing 21 in a manner of bonding or the like, so that the second mounting structure 23 is fastened to the second back housing 21.

Similar to the snap fit and the hanging hole fit, when the magnetic fit is used for the optical splitter 2 and the main gateway 1, the first mounting structure 13 includes the locating pin 134, and the second mounting structure 23 includes the locating hole 2341. The locating pin 134 fits with the locating hole 2341, to restrict the movement of the optical splitter 2 in the direction parallel to the first back housing 11. Certainly, because the magnetic member 133 can fasten a position of the magnetic attraction member 233 comprehensively and securely during the magnetic fit, an additional fitting structure of the locating pin 134 and the locating hole 2341 may not be arranged when the magnetic fit is used.

In the descriptions of the present disclosure, it should be understood that orientation or position relationships indicated by the terms (if any) such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of description of this application, instead of indicating or implying that the mentioned apparatus or element needs to have a particular orientation or be constructed and operated in a particular orientation. Therefore, such terms should not be understood as a limitation on this application.

Unless otherwise explicitly specified and limited, terms (if any) "mounting", "connected", and "connection" should be understood in a broad sense. For example, the connection may be a fixed connection, a detachable connection, or an integral connection; or the connection may be a mechanical connection; or the connection may be a direct connection, an indirect connection through an intermediary, or internal communication between two components or a mutual interaction relationship between two components. For a person of ordinary skill in the art, specific meanings of the foregoing terms in this application may be understood based on specific circumstances.

In addition, terms (if any) such as "first" and "second" are merely used for description, and cannot be understood as indicating or implying relative importance or implicitly indicating a quantity of indicated technical features. Therefore, a feature defined with "first" or "second" may explicitly or implicitly include one or more features. In the descriptions of this application, "a plurality of" means two or more, unless otherwise explicitly and specifically defined.

In this application, unless otherwise explicitly specified and defined, a first feature being "over" or "below" a second feature may include that the first feature and the second feature are in direct contact, or may include that the first feature and the second feature are not in direct contact but are in contact through another feature therebetween. Moreover, the first feature being "over", "above", and "on" the second feature includes that the first feature is directly or obliquely above the second feature, or merely means that the first feature is at a higher horizontal position than the second feature. The first feature being "below", "under", or "beneath" the second feature includes that the first feature is directly or obliquely below the second feature, or merely means that the first feature is at a lower horizontal position than the second feature.

In the descriptions of this specification, descriptions using reference terms "some implementations", "an implementation", "some implementations", "an example implementation", "an example", "a specific example", or "some examples" mean that specific features, structures, materials, or characteristics described with reference to the implementations or examples are included in at least one implementation or example of this application.

The foregoing descriptions are merely embodiments of this application, but are not intended to limit this application. Any modification, equivalent replacement, improvement, or the like made within the principle of this application shall fall within the protection scope of this application.

## Claims

1. An FTTR networking system, wherein the FTTR networking system comprises a main gateway (1) and an optical splitter (2), wherein
the main gateway (1) comprises a first back housing (11) and a first mounting structure (13), and the first mounting structure (13) is connected to the first back housing (11); and
the optical splitter (2) comprises a second mounting structure (23), and the second mounting structure (23) fits with the first mounting structure (13), to connect the optical splitter (2) to the first back housing (11) of the main gateway (1).

2. The FTTR networking system according to claim 1, wherein the main gateway (1) further comprises a first panel (12); and
the optical splitter (2) is shielded by the first panel (12), and the first panel (12) is arranged opposite to the first back housing (11).

3. The FTTR networking system according to claim 1, wherein the first mounting structure (13) comprises a pair of first snaps (131) that are arranged opposite to each other, and a snap-fit opening (1311) is defined between the pair of first snaps (131); and
the second mounting structure (23) comprises a pair of second snaps (231) that are arranged opposite to each other, and the second snaps (231) pass through the snap-fit opening (1311) and are snap-fitted with the first snaps (131).

4. The FTTR networking system according to claim 3, wherein at least one snap in the pair of first snaps (131) and the pair of second snaps (231) is provided with an inclined guide surface (1312; 2311), and the inclined guide surface (1312; 2311) is configured to guide the second snap (231) to pass through the snap-fit opening (1311).

5. The FTTR networking system according to claim 1, wherein the first mounting structure (13) comprises a mounting hole (132), and the second mounting structure (23) comprises a connecting pin (232); and
the connecting pin (232) penetrates into the mounting hole (132), and the connecting pin (232) is snap-fitted with an edge of the mounting hole (132), to restrict movement of the optical splitter (2) in a direction perpendicular to the first back housing (11).

6. The FTTR networking system according to claim 5, wherein the mounting hole (132) comprises a first hole (1321) and a second hole (1322) that are in communication with each other, and a diameter of the first hole (1321) is greater than a diameter of the second hole (1322);
the connecting pin (232) comprises a cap portion (2321) and a connecting rod portion (2322) that are connected, an outer diameter of the cap portion (2321) is less than the diameter of the first hole (1321) and greater than the diameter of the second hole (1322), and an outer diameter of the connecting rod portion (2322) is less than the diameter of the second hole (1322); and
the connecting rod portion (2322) is limited at one end of the second hole (1322) away from the first hole (1321).

7. The FTTR networking system according to claim 1, wherein the first mounting structure (13) comprises a magnetic member (133), the second mounting structure (23) comprises a magnetic attraction member (233), the magnetic member (133) is magnetic, and the magnetic attraction member (233) is attractable by the magnetic member (133); and
the magnetic member (133) and the magnetic attraction member (233) are connected through magnetic attraction.

8. The FTTR networking system according to claim 7, wherein the optical splitter (2) comprises a second back housing (21), and
the second mounting structure (23) is fastened to the second back housing (21); or the second mounting structure (23) is at least a part of the second back housing (21).

9. The FTTR networking system according to any one of claims 1 to 8, wherein the first mounting structure (13) comprises a locating pin (134), and the second mounting structure (23) comprises a locating hole (2341); and
the locating pin (134) fits with the locating hole (2341), to restrict movement of the optical splitter (2) in a direction parallel to the first back housing (11).

10. The FTTR networking system according to claim 9, wherein the optical splitter (2) comprises a lug portion (234) and a primary body portion (24), the lug portion (234) is connected to an edge of the primary body portion (24), and the lug portion (234) is arranged parallel to the first back housing (11); and
the locating hole (2341) is provided on the lug portion (234).

11. The FTTR networking system according to any one of claims 1 to 8, wherein the main gateway (1) is further provided with at least one wire-retaining structure (14), the at least one wire-retaining structure (14) is connected to the first back housing (11), and the wire-retaining structure (14) is configured to limit a position of an optical fiber connected to the optical splitter (2).

12. The FTTR networking system according to any one of claims 1 to 8, wherein the main gateway (1) comprises a support leg (15), the support leg (15) is located on a bottom side of the main gateway (1), and the support leg (15) is configured to support the main gateway (1) and the optical splitter (2).
